# FASCICULE DE BREVET EUROPEEN

(11) **EP 1 575 226 B1**
(45) Date de publication et mention de la délivrance du brevet: **24.08.2011**
(21) Numéro de dépôt: 05290492.7
(22) Date de dépôt: 04.03.2005
(51) Int. Cl.: H04L 12/56

(54) **Procédé de transmission de paquets de données dans un réseau de télécommunication et dispositif mettant en oeuvre ce procédé**
Verfahren und Vorrichtung zur Übertragung von Datenpaketen in einem Netzwerk
Method and device for transmission of data paquets in a telecommunications network

(30) Priorité: 12.03.2004 FR 0450509
(43) Date de publication de la demande: 14.09.2005
(73) Titulaire: Alcatel Lucent, 75008 Paris (FR)
(72) Inventeur: Marce, Olivier, 91300 Massy (FR); Galand, Damien, 92370 Chaville (FR)
(74) Mandataire: Keseris, Denis

(56) Documents cités:
- WO-A-01/19038
- US-A- 5 065 399
- US-A1- 2002 088 698
- RICHARD STEVENS, W: "TCP/IP Illustrated, Volume 1" 1994, ADDISON-WESLEY , READING, MA, USA , XP002308277 * page 85 - page 110 *

## Description

L'invention est relative à un procédé de transmission de paquets de données dans un réseau de télécommunication et à un dispositif mettant en oeuvre ce procédé, notamment pour l'analyse de ce réseau en cas de disfonctionnement.

Dans un réseau de télécommunication tel que le réseau Internet, des informations peuvent être envoyées d'un expéditeur vers un destinataire sous la forme de paquets, un paquet étant un groupe de données ayant un format défini par le protocole de communication du réseau et muni d'un en-tête dans lequel sont indiquées les adresses de l'expéditeur du paquet et de son destinataire.

Le paquet est transmis dans le réseau via différents noeuds, un noeud du réseau étant un élément pouvant lire l'adresse du destinataire d'un paquet pour diriger ce dernier vers un noeud ultérieur de telle sorte que, en répétant ces opérations de directions de noeud en noeud, le paquet soit transmis de l'expéditeur au destinataire selon un parcours optimal dans le réseau en termes, par exemple, de distance, de temps et d'encombrement.

Par la suite, les noeuds d'un réseau sont dénommés des routeurs. Dans le cas du réseau Internet, lorsqu'un premier routeur reçoit un paquet destiné à une adresse codée selon le protocole Internet (IP), ce routeur consulte des tables de routage internes associant d'adresses IP de destinataires à une ou plusieurs adresses IP de seconds routeurs vers lesquels ce premier routeur peut diriger ce paquet.

Ainsi, en fonction de ses tables de routages, le premier routeur transmet le paquet reçu à un second routeur, ce mode de routage étant dénommé par la suite mode de routage dynamique.

En d'autres termes, le parcours de routage des paquets entre les noeuds du réseau n'est pas prédéterminé puisque les routeurs sont configurés pour router les paquets de façon optimale en fonction, par exemple, du trafic du réseau. Dans ce cas, le second serveur sélectionné par un premier serveur pour la transmission d'un paquet varie en fonction des conditions de trafic du réseau.

Par ailleurs, un paquet de données peut être perdu lorsqu'un premier noeud dirige ce paquet vers un second noeud alors même que le lien entre ces noeuds est interrompu ou lorsque le premier noeud présente une erreur de configuration de sa table de routage, de telle sorte que le paquet de données n'est pas transmis ou est dirigé vers un noeud inexistant.

Lorsqu'un tel disfonctionnement se produit, il est nécessaire de prévenir l'expéditeur du paquet que ce dernier n'a pas pu atteindre son destinataire.

A cet effet, il est connu (notamment du document WO 01/19038) d'utiliser un procédé dénommé par la suite procédé de ping qui consiste à envoyer un paquet sans contenu particulier à un destinataire de telle sorte que, lors de la réception de ce paquet, ce dernier retourne à l'expéditeur un acquittement, ou réponse.

Dans le cas du réseau Internet, le procédé de ping consiste à envoyer d'un expéditeur A vers un destinataire B, un paquet comprenant une requête définie par le protocole des messages de commande Internet, (ou ICMP, de l'anglais : Internet Control Message Protocoi) et nommé lors de cet envoi ECHO_REQUEST.

Lorsque la requête est reçue par le destinataire B, ce dernier envoie une réponse nommée ECHO_REPLY à expéditeur A en échangeant, par rapport à la requête ECHO_REQUEST, les adresses d'expéditeur et de destinataire dans l'entête du paquet émis, ce procédé permettant ainsi de s'assurer du bon fonctionnement du dispositif situé au point B.

La présente invention résulte de la constatation que, lorsqu'un lien entre deux routeurs est brisé, un paquet peut être perdu lors de la transmission de la réponse, auquel cas il n'est pas possible pour l'expéditeur de la requête d'être informé sur l'origine de l'incident.

En effet, l'expéditeur de la réponse est le destinataire de la requête de telle sorte que le message d'erreur issu de la perte de cette réponse est délivré au destinataire de la requête et non à son expéditeur.

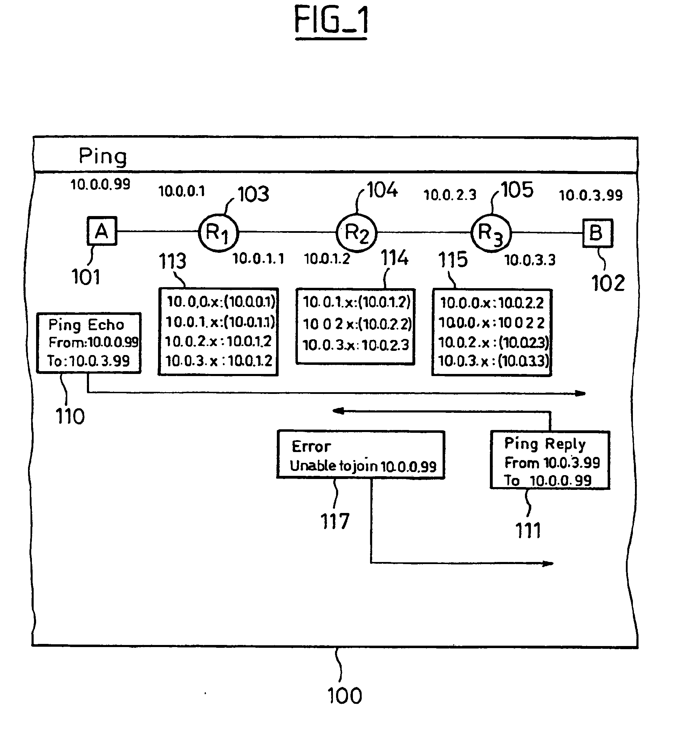

Cette situation est illustrée par la figure 1 sur laquelle est représenté un réseau 100 dont les communications sont basées sur le protocole Internet (IP, de l'anglais Internet Protocol) constitué de routeurs 103, 104 et 105, chaque routeur faisant l'interface entre deux sous réseaux avec une adresse propre dans chacun de ces sous réseaux, et de terminaux 101 et 102 ayant chacun une unique adresse IP.

Une requête 110 est envoyée depuis le terminal 101 via les routeurs 103, 104 et 105, vers le terminal 102. A cet effet, ces routeurs 103, 104 et 105 utilisent leurs tables de routage respectives 113, 114 et 115 et l'adresse 10.0.0.99 de l'expéditeur et l'adresse 10.0.3.99 du destinataire de la requête 110.

Ainsi, cette requête 110 est envoyée au premier routeur 103 d'adresses 10.0.0.1 et 10.0.1.1, sa table de routage 113 lui indiquant que les messages destinés aux adresses 10.0.3.x, pour x entier compris entre 0 et 255 doivent être routés vers le routeur d'adresse 10.0.1.2, soit vers le routeur 104.

Successivement, une telle opération de lecture des tables de routage se répète ensuite au niveau des routeurs 104 et 105 de telle sorte que la requête 110 atteint le terminal 102 du réseau d'adresse 10.0.3.99.

Après réception de la requête 110, le terminal 102 envoie une réponse 111 indiquant, comme adresse de l'expéditeur, son adresse 10.0.3.99, et l'adresse du terminal 101, 10.0.0.99, comme adresse du destinataire.

Cependant, la table de routage du routeur 104 présente une erreur de configuration sur le trajet de la réponse 111. En effet, la table de routage de ce dernier ne précise pas quel routage effectuer pour les messages d'adresse 10.0.0.x, la réponse 111 étant alors perdue.

Dans ce cas, un message d'erreur 117 est émis par le serveur 105, mais il est envoyé à l'expéditeur de la réponse 111, c'est-à-dire au destinataire 102 de la requête.

Ainsi, l'expéditeur de la requête (terminal 101) n'a pas la possibilité d'identifier le disfonctionnement du réseau.

La présente invention vise à résoudre ce problème en utilisant un procédé tel que, si un disfonctionnement du réseau se produit lors de la transmission d'une réponse à une requête, l'expéditeur de la requête est informé de ce disfonctionnement.

Ainsi, l'invention concerne un procédé de transmission de paquets de données dans un réseau de télécommunication formé de noeuds routant successivement les paquets émis par un expéditeur vers un destinataire de façon dynamique de telle sorte que ces paquets peuvent être routés selon différents parcours, le réseau utilisant un protocole tel qu'un destinataire recevant une requête transmet une réponse à l'expéditeur de la requête, caractérisé en ce que, en au moins un noeud du réseau, on route la réponse de façon dynamique vers l'expéditeur et on génère un paquet supplémentaire, dont le parcours est prédéterminé, destiné à l'expéditeur de la requête.

Un tel procédé utilise des paquets supplémentaires qui utilisent un parcours distinct du parcours déterminé dynamiquement, ces paquets informant l'expéditeur de la requête des éléments du réseau fonctionnant correctement.

Il convient de noter que, du fait de la multiplication des messages envoyés correctement (2n+1 messages pour une taille du trajet de n noeuds), ce procédé est particulièrement utile à l'analyse d'un réseau lors d'un disfonctionnement, c'est-à-dire de façon ponctuelle afin de limiter le trafic de données qu'il génère.

Dans une réalisation, le parcours prédéterminé comprend au moins un noeud suivi lors du parcours de la requête.

Selon une réalisation, le parcours prédéterminé correspond au parcours inverse de la requête.

Dans une réalisation, le paquet supplémentaire comprend un corps identique au corps de la réponse.

Selon une réalisation, le noeud est un routeur utilisant des tables de routage dynamiques dirigeant un paquet en fonction de paramètres tels que le délai de transmission ou le trafic du réseau.

Dans une réalisation, le réseau est le réseau Internet.

Selon une réalisation, on enregistre le parcours de la requête au fur et à mesure de son passage par des noeuds du réseau.

L'invention concerne aussi un serveur de transmission de paquets de données dans un réseau de télécommunication formé de noeuds routant successivement les paquets émis par un expéditeur vers un destinataire de façon dynamique de telle sorte que ces paquets peuvent être routés selon différents parcours, le réseau utilisant un protocole tel qu'un destinataire recevant une requête transmet une réponse à l'expéditeur de la requête, caractérisé en ce qu'il comprend des moyens pour router la réponse de façon dynamique vers l'expéditeur et des moyens pour générer un paquet supplémentaire, dont le parcours est prédéterminé, vers l'expéditeur du paquet.

Dans une réalisation le serveur de transmission de paquets comprend des moyens pour que le parcours prédéterminé comprenne au moins un noeud suivi lors du parcours de la requête.

Selon une réalisation, le serveur de transmission de paquets comprend des moyens pour que le parcours prédéterminé corresponde au parcours inverse de la requête.

Dans une réalisation, le serveur de transmission de paquets comprend des moyens pour que le paquet supplémentaire comprenne un corps identique au corps de la réponse.

Selon une réalisation, le serveur de transmission de paquets est un noeud routeur utilisant des tables de routage dynamiques dirigeant un paquet en fonction de paramètres tels que le délai de transmission ou le trafic du réseau.

Dans une réalisation, le serveur de transmission de paquets est le réseau Internet.

Selon une réalisation, le serveur de transmission de paquets comprend des moyens pour qu'on enregistre le parcours de la requête au fur et à mesure de son passage par des noeuds du réseau.

D'autres caractéristiques et avantages de l'invention apparaîtront avec la description effectuée ci-dessous, à titre illustratif et non limitatif, en référence aux figures ci-jointes sur lesquelles :
La figure 1, déjà décrite, représente le fonctionnement connu d'un réseau de télécommunication à paquets,
La figure 2 représente un procédé de routage de paquets selon l'invention,
La figure 3 représente une table de routage d'un noeud selon l'invention, et
La figure 4 représente le fonctionnement selon l'invention d'un réseau de télécommunication à paquets.

Dans la réalisation préférée de l'invention effectuée ci-dessous, les communications dans le réseau utilisent le protocole IP et les noeuds comprennent des routeurs tels que précédemment décrits.

En outre, cette réalisation utilise deux options connues du protocole IP à savoir l'enregistrement de parcours ou Record Route (RR) et Source Routing (SR) définies par la RFC (Request for Comments) 791 éditée par la DARPA (Defense Advanced Research Projects Agency) en septembre 1981.

Lorsque l'option RR est active, les adresses des différents routeurs empruntés par un paquet de données sont enregistrées dans le corps de ce paquet lors de son parcours tandis que l'option SR permet d'imposer la route que le paquet doit suivre en indiquant les adresses successives des routeurs à visiter.

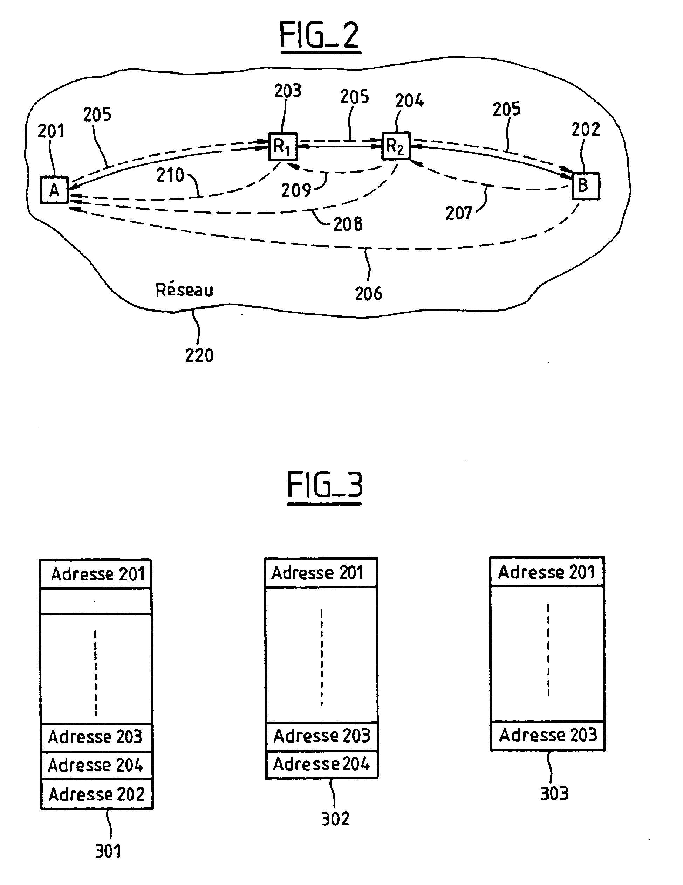

Par ailleurs, lors de l'envoi d'un paquet de données d'un expéditeur A vers un récepteur B (figure 2), l'option Record Route est activée de telle sorte que, lors de l'envoi d'une réponse par le noeud B, ce noeud envoie, outre la réponse selon l'art antérieur, dont le parcours est déterminé dynamiquement, un paquet additionnel utilisant la fonction SR, c'est-à-dire comprenant la liste modifiée des adresses des différents routeurs enregistrées lors du trajet de la requête.

Dans cet exemple, cette liste est obtenue en modifiant la liste d'adresses enregistrées dans le corps de la requête, en supprimant de la dernière adresse de cette liste, c'est-à-dire l'adresse du noeud B.

Ce paquet additionnel atteint le dernier noeud emprunté par la requête et, à ce noeud du réseau, reproduit la procédure effectuée au niveau du destinataire B, c'est-à-dire envoie une réponse routée dynamiquement au noeud A, ainsi qu'un paquet additionnel, dont le parcours est imposé, à savoir le parcours inverse de celui suivi par la requête.

Pour ce faire, on utilise le même protocole que précédemment en utilisant l'option SR à laquelle on passe, en paramètre, la liste modifiée des routeurs du trajet de la requête obtenue en modifiant la liste enregistrée par la requête par une suppression de la dernière adresse de la liste.

Sur la figure 2 est représentée une mise en oeuvre de l'invention.

Ainsi, une requête 205 est envoyée du noeud A 201 au noeud B 202 via le réseau de télécommunication à paquets 220. Cette requête est routée normalement sur son parcours vers le noeud 202 au cours duquel elle emprunte les noeuds 203 et 204.

A l'arrivée au noeud 202, la fonction Record Route a enregistré dans le corps de la requête la liste 301 (figure 3) des adresses des différents routeurs rencontrés sur le trajet du message.

Ainsi, cette liste comporte, comme dernières entrées, successivement les adresses des noeuds 203, 204 et 202.

En réponse à la requête 204, le noeud 202 envoie une réponse 206 utilisant un routage dynamique et un paquet 207 avec l'option SR activée, option à laquelle est passée en paramètre la liste 302, cette liste 302 étant la liste 301 de la requête à laquelle on a retiré la dernière entrée, c'est-à-dire l'adresse du noeud B. L'option SR envoie le message 207 à la dernière adresse de la liste 302, c'est-à-dire au noeud 204.

Une fois que ce message 207 est reçu par le noeud 204, la procédure est répétée. Ainsi, une réponse 208 est envoyée au noeud 201 avec un mode de routage dynamique, comme une réponse à une requête selon le procédé de ping envoyé au noeud 204. Un message additionnel 209 est envoyé à la dernière adresse de la liste 303, obtenue à partir de la liste 302 et ainsi de suite jusqu'à ce que le message additionnel routé de façon forcée atteigne le noeud 201.

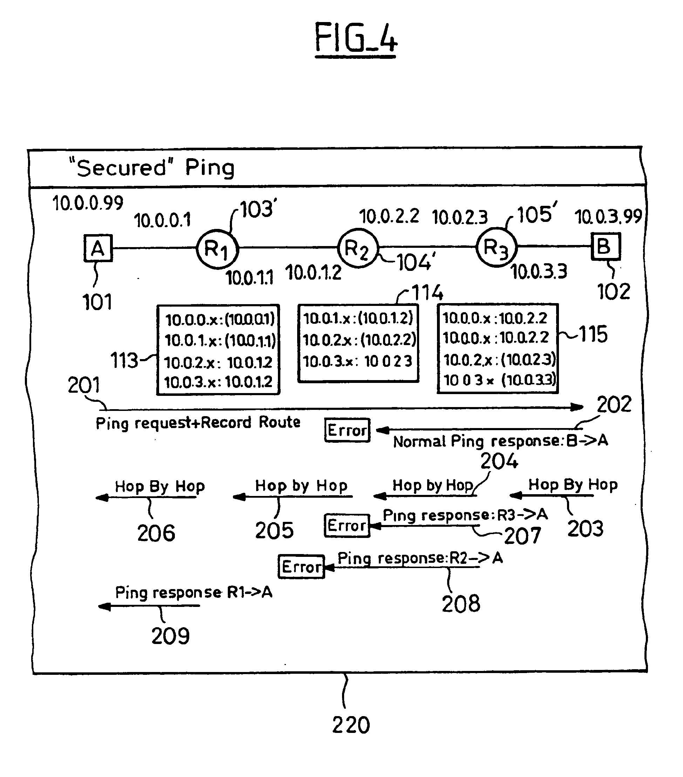

La figure 4 illustre l'application de l'invention au cas particulier de la figure 1 décrit précédemment. Dans ce cas, la requête 201 routée du terminal 101 au terminal 102 par les routeurs 103, 104 et 105, stocke grâce à l'option Record Route les adresses de ces différents routeurs.

Ainsi, lorsque le terminal 102 émet une réponse 202 routée dynamiquement comme décrit sur la figure 1, ce terminal 102 envoie également en parallèle un message 203 supplémentaire routé de façon forcée vers le routeur 105, dernier routeur du trajet de la requête 201 et dont l'adresse a été stockée dans cette dernière.

Le routeur 105 ayant reçu ce message 203 répète à son tour le procédé selon l'invention en renvoyant une réponse 207 à destination du terminal 101 ainsi qu'un message 204 à destination du routeur 104. Selon les tables de routages, la réponse 207 provoquera une erreur au niveau du routeur 104. Le procédé se poursuit donc tant qu'un message routé de façon forcée n'a pas atteint le terminal 101.

Lorsque le procédé est terminé, contrairement au cas décrit sur la figure 1 dans lequel le terminal 1 n'a reçu aucune information exploitable, dans le cas présent le terminal 101 a au moins reçu deux messages, à savoir le message 206 routé de façon forcée depuis le routeur 103 et la réponse 209 routée dynamiquement depuis ce même routeur.

Ces messages permettent ainsi de déterminer que l'erreur de configuration ayant conduit à la perte de la réponse 202 n'est pas sur le routeur 103, ce qui limite la recherche de l'erreur aux routeurs 104 et 105.

## Revendications

1. Procédé de transmission de paquets de données dans un réseau (220) de télécommunication formé de noeuds (103', 104', 105', 203, 204) routant successivement les paquets émis par un expéditeur (101) vers un destinataire (102) de façon dynamique de telle sorte que ces paquets peuvent être routés selon différents parcours, le réseau utilisant un protocole tel qu'un destinataire (102) recevant une requête transmet une réponse à l'expéditeur (101) de la requête, **caractérisé en ce que**, en au moins un noeud (103', 104', 105', 203, 204) du réseau, on route (202, 207, 209) la réponse de façon dynamique vers l'expéditeur (101) et on génère un paquet supplémentaire, dont le parcours (203, 204, 205, 206, 209) est prédéterminé, destiné à l'expéditeur de la requête.

2. Procédé de transmission de paquets selon la revendication 1 **caractérisé en ce que** le parcours prédéterminé (203, 204, 205, 206, 209) comprend au moins un noeud (103', 104', 105', 203, 204) suivi lors du parcours de la requête.

3. Procédé de transmission de paquets selon la revendication 2 **caractérisé en ce que** le parcours prédéterminé correspond au parcours inverse de la requête.

4. Procédé de transmission de paquets selon la revendication 1 ou 2 **caractérisé en ce que** le paquet supplémentaire comprend un corps identique au corps de la réponse.

5. Procédé de transmission de paquets selon l'une des revendications précédentes **caractérisé en ce que** le noeud (103', 104', 105', 203, 204) est un routeur utilisant des tables (113, 114, 115) de routage dynamiques dirigeant un paquet en fonction de paramètres tels que le délai de transmission ou le trafic du réseau.

6. Procédé de transmission de paquets selon l'une des revendications précédentes **caractérisé en ce que** le réseau (220) est le réseau Internet.

7. Procédé de transmission de paquets selon l'une des revendications précédentes **caractérisé en ce qu'**on enregistre le parcours de la requête au fur et à mesure de son passage par des noeuds du réseau.

8. Serveur (103', 104', 105', 203, 204) de transmission de paquets de données dans un réseau de télécommunication formé de noeuds routant successivement les paquets émis par un expéditeur vers un destinataire de façon dynamique de telle sorte que ces paquets peuvent être routés selon différents parcours, le réseau utilisant un protocole tel qu'un destinataire (102) recevant une requête transmet une réponse à l'expéditeur (101) de la requête, **caractérisé en ce qu'**il comprend des moyens pour router la réponse de façon dynamique (202, 207, 209) vers l'expéditeur (100) et des moyens pour générer un paquet supplémentaire, dont le parcours (203, 204, 205, 206, 209) est prédéterminé, destiné à l'expéditeur de la requête.

9. Serveur (103', 104', 105', 203, 204) de transmission de paquets selon la revendication 8 **caractérisé en ce qu'**il comprend des moyens pour que le parcours prédéterminé (203, 204, 205, 206, 209) comprenne au moins un noeud suivi lors du parcours de la requête.

10. Serveur (103', 104', 105', 203, 204) de transmission de paquets selon la revendication 9 **caractérisé en ce qu'**il comprend des moyens pour que le parcours prédéterminé corresponde au parcours inverse de la requête.

11. Serveur (103', 104', 105', 203, 204) de transmission de paquets selon la revendication 8 ou 9 **caractérisé en ce qu'**il comprend des moyens pour que le paquet supplémentaire comprenne un corps identique au corps de la réponse.

12. Serveur (103', 104', 105', 203, 204) de transmission de paquets selon l'une des revendications 8 à 11 **caractérisé en ce que** le noeud est un routeur utilisant des tables (113, 114, 115) de routage dynamiques dirigeant un paquet en fonction de paramètres tels que le délai de transmission ou le trafic du réseau.

13. Serveur (103', 104', 105', 203, 204) de transmission de paquets selon l'une des revendications 8 à 12 **caractérisé en ce que** le réseau (220) considéré est le réseau Internet.

14. Serveur (103', 104', 105', 203, 204) de transmission de paquets selon l'une des revendications 8 à 13 **caractérisé en ce qu'**il comprend des moyens pour qu'on enregistre le parcours de la requête au fur et à mesure de son passage par des noeuds du réseau.

## Claims

1. A method for transmitting data packets within a telecommunication network (220) formed of nodes (103', 104', 105', 203, 204) successively routing packets emitted by a sender (101) to a recipient (102) dynamically such that these packets can be routed along different paths, the network using a protocol such that a recipient (102) that receives a request transmits a response to the request's sender (101), **characterized in that**, in at least one node (103', 104', 105', 203, 204) of the network, the response is dynamically routed (202, 207, 209) to the sender (101) and an additional packet is generated, whose path (203, 204, 205, 206, 209) is predetermined, that is intended for the sender of the request.

2. A method for transmitting packets according to claim 1, **characterized in that** the predetermined path (203, 204, 205, 206, 209) comprises at least one node (103', 104', 105', 203, 204) tracked during the path taken by the request.

3. A method for transmitting packets according to claim 2, **characterized in that** the predetermined path corresponds to the reverse path of the request.

4. A method for transmitting packets according to claim 1 or 2, **characterized in that** the additional packet comprises a body identical to the body of the response.

5. A method for transmitting packets according to one of the preceding claims, **characterized in that** the node (103', 104', 105', 203, 204) is a router using dynamic routing tables (113, 114, 115) directing a packet as a function of parameters such as the transmission time or network traffic.

6. A method for transmitting packets according to one of the preceding claims, **characterized in that** the network (220) is the Internet.

7. A method for transmitting packets according to one of the preceding claims, **characterized in that** the path taken by the request is saved over time as it passes through the network's nodes.

8. A data packet transmission server (103', 104', 105', 203, 204) within a telecommunication network formed of nodes successively routing the packets emitted by a sender to a recipient dynamically, such that these packets may be routed along different paths, the network using a protocol such that a recipient (102) that receives a request transmits a response to the request's sender (101), **characterized in that** it comprises means for dynamically routing the response (202, 207, 209) to the sender (101) and means for generating an additional packet, whose path (203, 204, 205, 206, 209) is predetermined, that is intended for the sender of the request.

9. A data packet transmission server (103', 104', 105', 203, 204) according to claim 8, **characterized in that** it comprises means so that the predetermined path (203, 204, 205, 206, 209) comprises at least one node tracked during the path taken by the request.

10. A data packet transmission server (103', 104', 105', 203, 204) according to claim 9 **characterized in that** it comprises means so that the predetermined path corresponds to the reverse path of the request.

11. A data packet transmission server (103', 104', 105', 203, 204) according to claim 8 or 9, **characterized in that** it comprises means so that the additional packet comprises a body identical to the body of the response.

12. A data packet transmission server (103', 104', 105', 203, 204) according to one of the claims 8 to 11, **characterized in that** the node is a router using dynamic routing tables (113, 114, 115) directing a packet as a function of parameters such as the transmission time or network traffic.

13. A data packet transmission server (103', 104', 105', 203, 204) according to one of the claims 8 to 12, **characterized in that** the network (220) in question is the Internet.

14. A data packet transmission server (103', 104', 105', 203, 204) according to one of the claims 8 to 13, **characterized in that** it comprises means so that the path taken by the request is saved over time as it passes through the network's nodes.

## Patentansprüche

1. Verfahren zur Übertragung von Datenpaketen in einem Telekommunikationsnetzwerk (220) bestehend aus Knoten (103', 104', 105', 203, 204), welche die von einem Absender (101) an einen Empfänger (102) ausgegebenen Pakete derart dynamisch nacheinander routen, dass diese Pakete über verschiedene Strecken geroutet werden können, wobei das Netzwerk ein Protokoll verwendet, mit welchem ein Empfänger (102), der eine Anfrage empfängt, eine Antwort an den Absender (101) der Anfrage überträgt, **dadurch gekennzeichnet, dass** man an mindestens einem Knoten (103', 104', 105', 203, 204) des Netzwerks die Antwort dynamisch an den Absender (101) routet (202, 207, 209) und ein zusätzliches Paket erzeugt, welches über eine vorbestimmte Strecke (203, 204, 205, 206, 209) geroutet wird und für den Absender der Anfrage bestimmt ist.

2. Verfahren zur Übertragung von Paketen nach Anspruch 1, **dadurch gekennzeichnet, dass** die vorbestimmte Strecke (203, 204, 205, 206, 209) mindestens einen Knoten (103', 104', 105', 203, 204), welcher innerhalb der Strecke der Anfrage benutzt wird, umfasst.

3. Verfahren zur Übertragung von Paketen nach Anspruch 2, **dadurch gekennzeichnet, dass** die vorbestimmte Strecke der der Anfrage entgegengesetzten Strecke entspricht.

4. Verfahren zur Übertragung von Paketen nach Anspruch 1 oder 2, **dadurch gekennzeichnet, dass** das zusätzliche Paket einen mit dem Körper der Antwort identischen Körper enthält.

5. Verfahren zur Übertragung von Paketen nach einem der vorstehenden Ansprüche, **dadurch gekennzeichnet, dass** der Knoten (103', 104', 105', 203, 204) ein Router ist, der dynamische Routing-Tabellen (113, 114, 115) verwendet, um ein Paket gemäß Parametern wie beispielsweise die Übertragungsverzögerung oder der Netzwerkverkehr zu lenken.

6. Verfahren zur Übertragung von Paketen nach einem der vorstehenden Ansprüche, **dadurch gekennzeichnet, dass** das Netzwerk (220) das Internet-Netzwerk ist.

7. Verfahren zur Übertragung von Paketen nach einem der vorstehenden Ansprüche, **dadurch gekennzeichnet, dass** man die Strecke der Anfrage jedesmal, wenn ein Knoten des Netzwerk durchlaufen wird, speichert.

8. Server (103', 104', 105', 203, 204) zur Übertragung von Paketen in einem Telekommunikationsnetzwerk bestehend aus Knoten, welche die von einem Absender an einen Empfänger ausgegebenen Pakete derart dynamisch routen, dass diese Pakete über verschiedene Strecken geroutet werden können, wobei das Netzwerk ein Protokoll verwendet, mit welchem ein Empfänger (102), der eine Anfrage empfängt, eine Antwort an den Absender (101) der Anfrage überträgt, **dadurch gekennzeichnet, dass** er Mittel umfasst, um die Antwort dynamisch an den Absender (101) zu routen (202, 207, 209), sowie Mittel, um ein zusätzliches Paket zu erzeugen, welches über eine vorbestimmte Strecke (203, 204, 205, 206, 209) geroutet wird und für den Absender der Anfrage bestimmt ist.

9. Server (103', 104', 105', 203, 204) zur Übertragung von Paketen nach Anspruch 8, **dadurch gekennzeichnet, dass** er Mittel umfasst, die bewirken, dass die vorbestimmte Strecke (203, 204, 205, 206, 209) mindestens einen Knoten umfasst, welcher innerhalb der Strecke der Anfrage benutzt wird, umfasst.

10. Server (103', 104', 105', 203, 204) zur Übertragung von Paketen nach Anspruch 9, **dadurch gekennzeichnet, dass** er Mittel umfasst, die bewirken, dass die vorbestimmte Strecke der der Anfrage entgegengesetzten Strecke entspricht.

11. Server (103', 104', 105', 203, 204) zur Übertragung von Paketen nach Anspruch 8 oder 9, **dadurch gekennzeichnet, dass** er Mittel umfasst, die bewirken, dass das zusätzliche Paket einen mit dem Körper der Antwort identischen Körper enthält.

12. Server (103', 104', 105', 203, 204) zur Übertragung von Paketen nach einem der Ansprüche 8 bis 11, **dadurch gekennzeichnet, dass** der Knoten ein Router ist, welcher dynamische Routing-Tabellen (113, 114, 115) verwendet, um ein Paket gemäß Parametern wie beispielsweise die Übertragungsverzögerung oder der Netzwerkverkehr zu lenken.

13. Server (103', 104', 105', 203, 204) zur Übertragung von Paketen nach einem der Ansprüche 8 bis 12, **dadurch gekennzeichnet, dass** das betroffene Netzwerk (220) das Internet-Netzwerk ist.

14. Server (103', 104', 105', 203, 204) zur Übertragung von Paketen nach einem der Ansprüche 8 bis 13, **dadurch gekennzeichnet, dass** er Mittel umfasst, die bewirken, dass man die Strecke der Anfrage jedesmal, wenn ein Knoten des Netzwerk durchlaufen wird, speichert.
